# EUROPEAN PATENT APPLICATION

(11) **EP 2 165 982 A1**
(43) Date of publication of application: **24.03.2010**
(21) Application number: 08016355.3
(22) Date of filing: 17.09.2008
(51) Int. Cl.: C02F 3/30

(54) **A biological reactor for wastewater**

(71) Applicant: National University of Ireland, Galway, Galway (IE)
(72) Inventor: Rodgers, Michael, Salthill, Galway (IE); O'Reilly, Edmond, Clonmel, County Tipperary (IE); Clifford, Eoghan, Bruff, County Limerick (IE)
(74) Representative: O'Neill, Brian

(57) **Abstract**

The present invention provides an apparatus for biologically processing fluid, in particular wastewater, the apparatus comprising two reservoirs contain growth medium for supporting a biofilm thereon, the apparatus further comprising vacuum pumps which are arranged to effect the transfer of fluid between the two reservoirs in order to enable a large number of biological processes to be carried out by the relatively simple apparatus.

## Description

### Field of the invention

The present invention is concerned with a method and apparatus for biologically processing fluid, in particular wastewater or the like, and specifically to remove contaminants such as biodegradable organic carbon, nitrogen, phosphorus and recalcitrant compounds.

### Background of the invention

Wastewater or sewage is essentially polluted water released from residences, businesses, and municipal/industrial/agricultural sources, and must be suitably treated, by reducing or removing organic matter, disease causing organisms, and other pollutants therefrom, before being released back into the environment, or being re-used. Three of the main wastewater borne sources of pollution that result in environmental damage are organic carbon, phosphorus and nitrogen. Some of the environmental issues associated with elevated levels of carbon, phosphorus and nitrogen are increased levels of organic nutrients and minerals in bodies of water, resulting in the excess growth of plant life, in particular algae. This will normally result in a reduction of the dissolved oxygen content of the water, and can therefore cause the extinction of other organisms residing in such bodies of water. A further issue arising from untreated wastewater is unsafe levels of nitrate in drinking water, in addition to odour problems.

The most effective and economic method for the treatment of wastewater is the biological processing thereof using some form of biomass, thereby achieving aerobic processing, anoxic processing, anaerobic processing, or a combination thereof. The biomass is generally contained within some form of reactor, or as a biofilm on a suitable substratum, with which the wastewater is brought into contact. The biological processes result in the removal of organic carbon from the wastewater, the carbon being consumed by the biomass, and the nitrification and denitrification of nitrogen in the wastewater. Nitrification is the biological process of converting ammonium firstly to nitrite, and subsequently to nitrate. This process is achieved in two stages, the first being the conversion of ammonium into nitrite by ammonium oxidising micro-organisms, and a second stage in which the nitrite is converted into nitrate, by nitrogen oxidising micro-organisms. The nitrate can then be converted, by the biological process of denitrification, into nitrogen and other gaseous end products. Denitrification occurs in an anoxic environment in the presence of nitrates and an organic carbon source.

In an alternative arrangement, ammonium could be first converted to nitrite in aerobic conditions and then subsequently converted to nitrogen gas in anaerobic conditions without going through the nitrite-to-nitrate conversion, e.g. in a process called Anammox.

Phosphorus removal can occur by phosphorus accumulating organisms (PAOs) when they are first subjected to anaerobic conditions in the presence of organic carbon resulting in phosphorus release into solution, and are then subjected to aerobic conditions when they exercise a luxury uptake of soluble phosphorus into their cells. The cells are then removed from the wastewater treatment process after settlement.

A large number of biomass based systems or reactors exist for the treatment of wastewater, whether on a large or small scale, for example biological aerated filters (BAF), moving media biofilm reactor systems (MMBR), sand filters and peat filter systems. BAF systems normally consist of plastic media immersed in the wastewater to be treated. Biofilms develop on these media and receive their oxygen from compressed air that is diffused into the treatment reactor. These biofilms use the substrates in the wastewater and the diffused oxygen to generate new cells which, when they become separated from the plastic media, can be settled out in a clarifier and the treated water can be discharged to a watercourse. BAF systems can become clogged and may need a mechanism for dislodging the clogged material from the plastic media. In addition, the compressed air may not supply adequate oxygen throughout the system.

MMBR systems consist of small plastic elements that are suspended in the reactor using the motion of the wastewater caused by a compressor or mixer. Biofilms develop on these elements. However, the elements can be completely bridged with biofilm growth and must be retained in the reactors. This retention can cause problems.

Sand filters consist of a layer of graded sand, approximately 0.6 to 0.9 metres deep, with particles within a particular size range through which the wastewater is percolated. Biofilm builds on the sand particles and carries out the necessary treatment. A plan area of about 4m² per person is required to avoid clogging, which is a common occurrence and may occur due to variable loading. Clogging requires significant maintenance of the system. In addition, suitable sand may not be available locally. A peat filter system consists of a layer of peat fibre, approximately 0.6 metres deep, through which the wastewater is percolated. Again clogging is common and can occur due to variable loading, thereby requiring significant maintenance.

It is therefore an object of the present invention to provide an improved biological reactor for the treatment of wastewater.

### Summary of the invention

According to a first aspect of the present invention there is provided an apparatus for biologically processing fluid, the apparatus comprising a first reservoir containing growth medium for supporting a biofilm thereon; a second reservoir adapted to receive fluid from the first reservoir in order to maintain the fluid, in use, out of contact with the biofilm, thereby exposing the biofilm in order to promote aerobic growth; and means for creating a pressure difference between the interior of the first and second reservoirs in order to effect a transfer of fluid therebetween.

Preferably, the pressure means is adapted to alter the pressure in a headspace of the first and/or second reservoir in order to effect the transfer of fluid therebetween and/or to pressurise the air of the first and/or second reservoir in order to improve the transfer of oxygen to the respective biofilm when exposed to said air.

Preferably, the pressure means is operable to create at least a partial vacuum or a positive pressure above atmospheric in the headspace of one and/or the other of the first and second reservoirs.

Preferably, the first and/or second reservoirs comprise a selectively openable air intake.

Preferably, the first and/or second reservoirs may be rendered airtight during the operation of the apparatus.

Preferably, the apparatus comprises a conduit connecting the first and second reservoirs, the conduit being selectively openable to permit the transfer of fluid between the reservoirs.

Preferably, the second reservoir contains growth medium for supporting a biofilm thereon.

Preferably, the conduit extends from at or adjacent a base of each of the two reservoirs.

Preferably, the apparatus comprises a timer for operating the pressure means at set intervals.

Preferably, the apparatus comprises one or more sensors in operative association with the pressure means, the one or more sensors being arranged to actuate pressure means when the water in the first and/or the second reservoir reaches a pre-determined level.

Preferably, the apparatus comprises means for introducing fluid into the first and/or the second reservoir.

According to a second aspect of the present invention there is provided a method for biologically processing fluid, the method comprising introducing the fluid into a first reservoir containing growth medium supporting a biofilm thereon; creating a pressure difference between the first reservoir and a second reservoir in order to effect the transfer of at least a portion of the fluid into the second reservoir; and returning at least a portion of the fluid from the second reservoir to the first reservoir.

Preferably, the step of creating a pressure difference between the reservoirs comprises creating at least a partial vacuum in the headspace of one of the reservoirs.

Preferably, the step of creating a pressure difference further comprises simultaneously exposing the headspace of the other reservoir to atmospheric pressure or higher while creating the at least partial vacuum.

Preferably, the method comprises the step of providing, in the second reservoir, growth medium supporting a biofilm thereon.

Preferably, the method comprises automatically transferring the fluid between the reservoirs after a pre-determined interval.

Preferably, the method comprises transferring the fluid from the respective reservoir from at or adjacent a base thereof.

### Brief description of the drawings

The present invention will now be described with reference to the accompanying drawings, in which:
Figure 1 illustrates a schematic representation of a reactor apparatus according to a preferred embodiment of the invention;
Figure 2 illustrates the apparatus of Figure 1 in which wastewater being treated by the reactor has been pumped into a single reservoir of the reactor;
Figure 3 illustrates the arrangement of Figure 2 in which a conduit connecting the reservoirs of the apparatus has been closed;
Figure 4 illustrates the apparatus of the invention, in which all of the wastewater has been transferred into the other reservoir; and
Figure 5 illustrates the arrangement of Figure 4 in which a conduit connecting the reservoirs of the apparatus has been closed.

### Detailed description of the drawings

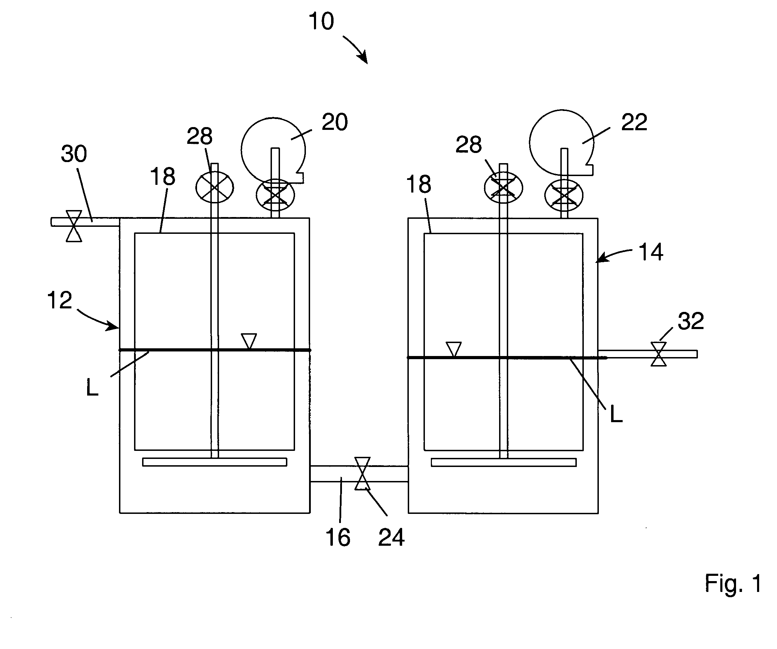

Referring now to figures 1 to 5 of the accompanying drawings, there is illustrated an apparatus according to the present invention, generally indicated as 10, for use in the biological processing of fluid (not shown), for example wastewater from industrial, commercial or residential sources, or any other fluids suitable for biological processing using the apparatus 10.

The apparatus 10 comprises a first reservoir 12, which as will be described hereinafter in detail, is capable of being made airtight, and a second reservoir 14, also capable of being made airtight, which are connected together via a conduit 16 which is arranged to selectively permit the flow of fluid between the reservoirs 12, 14, as will be described. Each reservoir 12, 14, contains growth medium 18 therein which supports, in use, a biofilm thereon for effecting the biological processing of fluid contained within either reservoir 12, 14. The reservoirs 12, 14 may be of any suitable shape/form, and may be formed from any suitable material, preferably a plastic or the like.

Each reservoir 12, 14 is capable of operating, in isolation, in substantially conventional fashion, whereby fluid could be introduced into the reservoir 12, 14, such as to cover the growth medium 18, and therefore the biofilm thereon, wherein the biofilm would affect the aerobic/anaerobic/anoxic processing of the fluid over an extended period, usually a number of hours or days. During the processing period, the biofilm is immersed in the wastewater, and consumes the contaminants therein, or converts same into less harmful substances, by anaerobic or anoxic processes, or by aerobic processes when oxygen is present. Aerobic processing would therefore require a supply of oxygen to be pumped into the respective reservoir 12, 14 in order to ensure the continued aerobic processing, when necessary, of the wastewater. Such oxygenation is generally costly, and adds significantly to the complexity of the arrangement, and must be carefully maintained in order to ensure correct operation. The apparatus 10 of the present invention avoids the need for such costly and complex additions by utilising the first reservoir 12 and second reservoir 14 in sequence, as will be described in detail hereinafter, in order to achieve significant aeration of the biofilms within each reservoir 12, 14.

In brief, wastewater is introduced into the first reservoir 12 or the second reservoir 14, generally from a main feed tank (not shown) or the like, and is held in the respective reservoir 12, 14 in order to begin the biological processing thereof by part or all of the respective biofilm. For the following description of the operation of the apparatus 10, the wastewater is taken to have been initially fed to the first reservoir 12, although it will be appreciated that it could equally be fed to the second reservoir 14, both reservoirs 12, 14 being essentially identical. While the wastewater is being processed by the biofilm in the first reservoir 12, the biofilm in the second reservoir 14 is exposed to the atmosphere or pressurised air, as the second reservoir 14 is substantially empty. This biofilm therefore receives oxygen from the air under a high concentration gradient, thereby promoting the aerobic growth of the biofilm. After a set period, the wastewater is transferred from the first reservoir 12 into the second reservoir 14, and maintained therein for a further set period, thereby effecting the further biological processing of the wastewater. While this is occurring, the biofilm in the first reservoir 12 is exposed to the atmosphere or pressurised air, again promoting the aerobic growth of same. This sequence is repeated a number of times until the wastewater has been satisfactorily aerobically treated, following which the wastewater, or at least a portion thereof, is withdrawn from the apparatus 10, and a new batch of wastewater introduced into same.

In the embodiment illustrated, in order to effect the transfer of wastewater between the reservoirs 12, 14, the apparatus 10 is provided with pressure means in the form of a first vacuum pump 20 in operative association with the first reservoir 12, and a second vacuum pump 22 in operative association with the second reservoir 14. The vacuum pumps 20, 22 may be of any suitable form, and may be driven by any suitable means, most preferably electrically driven. Each vacuum pump 20, 22 has an intake that opens onto the headspace of the respective reservoir 12, 14, and exhausts to atmosphere, or alternatively to some downstream processing or storage station (not shown) at which the gases created during the biological processing of the wastewater may be utilised. In use the first vacuum pump 20 is operable to create a partial vacuum in the headspace above the fluid in the first reservoir 12 which, in combination with exposing the second reservoir 14 to atmospheric pressure or pressure above atmospheric, effects the transfer of fluid from the second reservoir 14 to the first reservoir 12 through the conduit 16, which must be open to allow this transfer. To this end, the conduit 16 is provided with a valve 24 thereon, which is controlled as part of the apparatus 10, to open at the correct times as described below.

Similarly, the second vacuum pump 22 is operable to create a partial vacuum in the headspace of the second reservoir 14 for effecting fluid transfer back to the second reservoir 14 through the conduit 16, by simultaneously exposing the first reservoir 12 to atmospheric pressure or pressure above atmospheric. In order to enable each reservoir 12, 14 to be partially evacuated by the respective vacuum pump 20, 22, the respective reservoir must be airtight during the partial evacuation thereof. Each of the reservoirs 12, 14 therefore include a lid 26, on which the respective vacuum pump 20, 22 is mounted. In order to enable each reservoir to then be exposed to atmospheric pressure or pressure above atmospheric while the other is partially evacuated, each reservoir 12, 14 comprises an air intake in the form of a sealable vent 28, which in the embodiment illustrated in mounted to the lid 26. Again the apparatus is adapted, for example via suitable control circuitry (not shown) to open one and/or other vent 28 at appropriate times during the operation of the apparatus 10. The above-mentioned arrangement therefore allows fluid to be transferred easily between the reservoirs 12, 14. This arrangement, as will be described below, also allows a high degree of control over the environment within each reservoir 12, 14, allowing for example an aerobic, anaerobic or anoxic atmosphere to be created.

Although not illustrated, suitable means for initially introducing the wastewater into the apparatus 10 may be provided as part of the apparatus 10, but will normally be a separate component, conventionally associated with the feed tank (not shown) or the like from which the wastewater is supplied, via an inlet 30 in the first reservoir 12. However, the first vacuum pump 20 could be utilised to partially evacuate the first reservoir 12, with the valve 24 closed and the inlet 30 open, thereby drawing the wastewater into the first reservoir 12 from the feed tank (not shown), thus eliminating the need to pump in the influent wastewater.

The apparatus 10 is also provided with an effluent valve 32, preferably in the second reservoir 14, in order to facilitate the withdrawal of the treated wastewater from the apparatus 10. In the embodiment illustrated, the effluent valve 32 is solenoid operated, in order to allow the automated operation of same via the above mentioned control circuitry (not shown) or the like. The effluent valve 32 could of course be manually operable, or may be operated by any other suitable means. In addition, any other suitable equivalent could be substituted for the effluent valve 32, in order to allow the wastewater to be drained from the apparatus 10. The effluent valve 32 will conventionally be connected to a suitable drain (not shown) or the like, or could connect to a further reservoir (not shown) from which the treated wastewater is re-used for any suitable purpose.

The apparatus 10 is also preferably provided with dispersing means (not shown) such as a baffle or the like adjacent each end of the conduit 16 in order to disperse the fluid entering each reservoir 12, 14. This dispersing of the fluid acts to prevent the biomass colonising the growth medium 18 from being forcibly washed off same.

Also mounted within each reservoir 12, 14 is a lower switch or sensor (not shown), preferably just below the lower level of the growth medium 18, and an upper switch or sensor (not shown), preferably just above the upper level of the growth medium 18. The switches/sensors are each operable to detect the level of fluid within the respective reservoirs 12, 14 and to actuate the first vacuum pump 20 and/or the second vacuum pump 22 as required, as will be described hereinafter in detail. The switches/sensors are preferably conventional float switches, but could of course be of any other suitable form.

The operation of the apparatus 10 will now be described in detail. Initially, as indicated above, wastewater is introduced into the first reservoir 12 via the inlet 30, and held in the first reservoir 12 for a pre-determined period, which will vary depending on the type/condition of the wastewater to be treated, and therefore the type of treatment to be effected, as detailed in the examples given below. The wastewater is drawn into the first reservoir 12 by closing the valve 24 and the vent 28 in the first reservoir 12, and then actuating the first vacuum pump 20. Once activated an inlet valve 30 on the inlet pipe 32 is opened, allowing wastewater to be drawn into the first reservoir 12 from the feed tank (not shown) to half fill the first reservoir 12. The reason for only half filling is that the second reservoir 14 will generally still be half full of nitrified wastewater from the previous cycle.

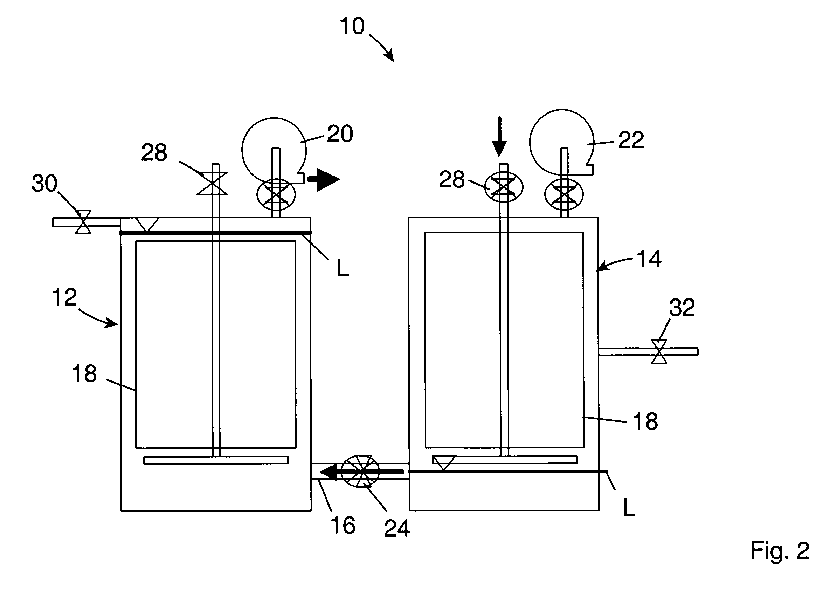

Referring to Figure 1, once the first reservoir 12 has been half filled with wastewater, the inlet 30 is closed, and the first vacuum pump 20 is deactivated. When the wastewater in the second reservoir 14 is to be transferred into the first reservoir 12 to at least partially fill same and at least partially empty the second reservoir 14, the valve 24 on the conduit 16 is opened, as is the vent 28 in the second reservoir 14, to allow the wastewater to flow into the first reservoir 12. In the drawings the dark horizontal line L indicates the level of wastewater in each reservoir 12, 14. Referring to Figure 2 the wastewater is then transferred into the first reservoir 12 through the use of the first vacuum pump 20, which will cause the wastewater to be transferred until the level in the first reservoir 12 reaches that of the upper switch (not shown), or alternatively when the level of the second reservoir 14 reaches that of the lower switch (not shown), wherein the respective switch/sensor is actuated, to switch off the first vacuum pump 20. The creation of a partial vacuum within the first reservoir 12 is aided by the closing of the vent 28 at the top of the first reservoir 12 and the opening of vent 28 at the top of second reservoir 14. The biofilm in the first reservoir 12 will have been receiving oxygen from the air, promoting the aerobic growth thereof.

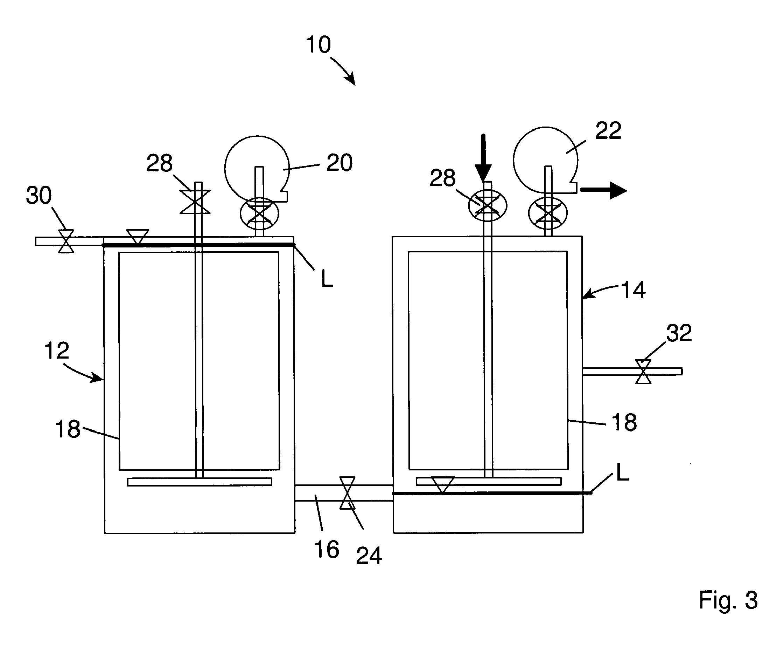

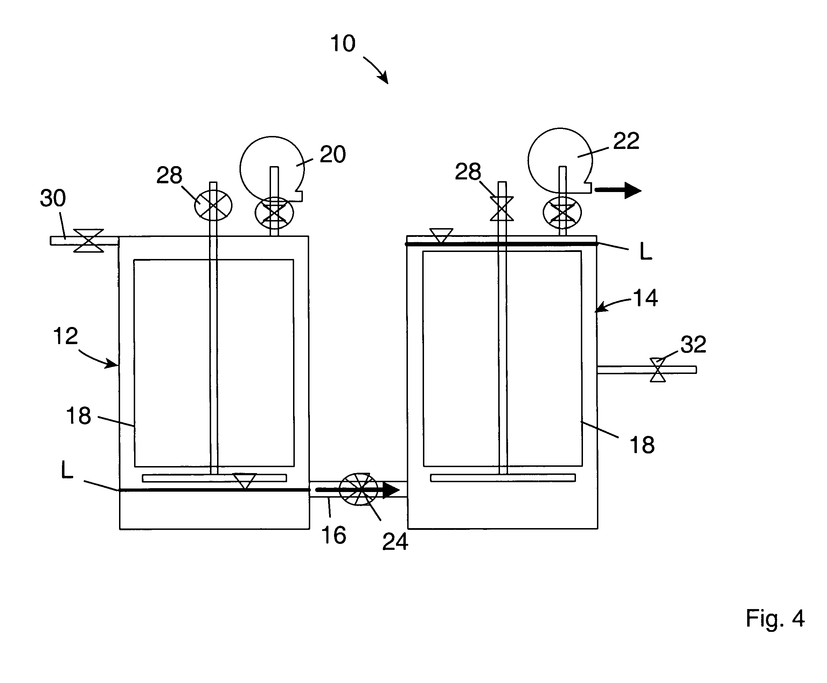

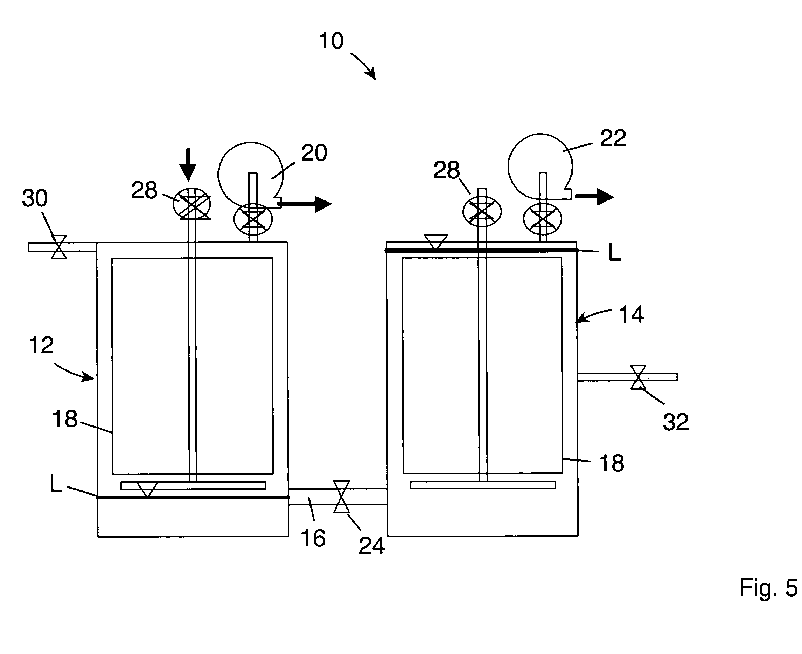

Referring to Figure 3, the wastewater is held in the first reservoir 12 for a pre-determined period, before moving back into the second reservoir 14 as illustrated in Figure 4, via a similar utilisation of the second vacuum pump 22. The valve 16 and vent 28 on the first reservoir 12 are opened, and the second vacuum pump 22 is activated in order to draw the wastewater through the conduit 16 into the second reservoir 14. As illustrated in Figure 5, once the second reservoir 14 is filled, the valve 24 may be closed to allow the wastewater to be held for processing in the second reservoir 14. From here the cycle can begin again.

Thus as the wastewater is cycled between the reservoirs 12, 14, the respective biofilms will effect the efficient aerobic processing thereof. If nitrogen is present in the wastewater, and thus de-nitrification of same is necessary, the wastewater may be held in one or other of the reservoirs 12, 14 for a prolonged period, for example a number of hours, whereby any oxygen in the wastewater will be quickly consumed by aerobic processes, which will then lead to anoxic conditions in the wastewater, and thus de-nitrification will be effected by the respective biofilm in the presence of organic matter that would be available from the feed wastewater.

Where aerobic processing is required for the removal of organic carbon, the cycle of transferring between the first reservoir 12 and the second reservoir 14 is preferably in the order of 10 minutes, although this may of course vary to suit particular requirements. The vacuum pumps 20, 22 are therefore preferably controlled by timers (not shown), which are programmable in order to allow various sequences to be implemented by the apparatus 10. The vacuum pumps 20, 22, and the switches therefore preferably connected to and controlled by a conventional programmable logic controller (PLC) (not shown). The PLC may therefore be programmed to suit the type of wastewater to be processed, according to whether the wastewater contains carbon, nitrogen or phosphorus, etc.

Once the wastewater has been suitably processed, the wastewater is allowed to settle in the second reservoir 14, following which the effluent valve 32 is opened, again preferably by the PLC, and the treated wastewater decanted before the introduction of more untreated wastewater to the apparatus 10.

The normal operation of the apparatus 10 thus includes a number of phases for each cycle of wastewater treatment, namely fill, react, settle and empty. The times of the individual phases may vary considerably depending on the type of processing to be carried out. The following examples illustrate some of the possible sequences which may be effected by the apparatus 10, where the phase times are given as examples only.

For organic carbon removal and settlement of solids these phases could be:
- Fill (0.25 hrs), the untreated feed wastewater would be transferred to the first reservoir 12
- React (4 hrs), the wastewater would transfer back and forth between the reservoirs 12, 14 by the use of pressure differentials in the reservoirs 12, 14, bringing the wastewater in contact with the previously oxygen-enriched biomass resulting in organic carbon removal and nitrification of ammonium nitrogen to nitrate nitrogen
- Settle (0.5 hrs), the wastewater would be allowed to settle in the second reservoir 14
- Empty (0.5 hrs), the clarified wastewater at the top of the reservoir 14 would be decanted, via the effluent valve.

For organic carbon and nitrogen removal, and the settlement of solids these phases could be:
- Fill (0.25 hrs), the untreated feed wastewater would be transferred to the first reservoir 12 which could be up to ½ full from the previous cycle
- React 1 (4 hrs), the wastewater would be left in the first reservoir 12 where the low dissolved oxygen condition would lead to the denitrification of the nitrate nitrogen to nitrogen gas in the water from the previous cycle in the presence of organic carbon in the untreated wastewater
- React 2 (4 hrs), the wastewater would transfer back and forth between the reservoirs 12, 14 by the use of the pressure differences in the reservoirs 12, 14, bringing the wastewater in contact with the previously oxygen-enriched biomass resulting in organic carbon removal and nitrification of ammonium nitrogen to nitrate nitrogen
- Settle (0.5 hrs), the wastewater would be allowed to settle in the second reservoir 14
- Empty (0.5 hrs), the clarified wastewater at the top of the first reservoir 14 would be decanted.

For organic carbon, nitrogen and phosphorus removal, and the settlement of solids these phases could be:
- Fill (0.25 hrs), the untreated feed wastewater would be transferred to ½ fill the first reservoir 12, which would be empty from the previous cycle; the second reservoir 14 would be already ½ full.
- React 1 (4 hrs), the new wastewater would be left in the first reservoir 12 where the low dissolved oxygen condition would lead to the uptake of organic carbon and the release of phosphorus from the phosphorus accumulating organisms (PAO) into solution.
- React 2 (4 hrs), the wastewater from the previous cycle in the second reservoir 14 would be transferred to the first reservoir 12 where the low dissolved oxygen condition would lead to the denitrification of the nitrate nitrogen to nitrogen gas in the water from the previous cycle.
- React 3 (4 hrs), the wastewater would transfer back and forth between the reservoirs 12, 14 by the use of the pressure differences in the reservoirs 12, 14, bringing the wastewater in contact with the previously oxygen-enriched biomass resulting in organic carbon removal and nitrification of ammonium nitrogen to nitrate nitrogen
- Settle (0.5 hrs), the wastewater would be allowed to settle in the second reservoir 14
- Empty (0.5 hrs), the clarified wastewater at the top of the second reservoir 14 would be decanted. Some biosolids would also be removed to take out the phosphorus in the PAO cells.

During the processing of wastewater by the apparatus 10, the biofilm in each reservoir 12, 14 will grow in volume, which in conventional biomass reactors (not shown) can lead to clogging of the growth medium therein. However, the growth medium 18 in each reservoir 12, 14 is preferably of vertical tubular form, in particular an array of vertically oriented tubular elements, which will therefore prevent the clogging of same by excess biomass growth, as the biofilm colonising the growth medium 18 would not be capable of holding up a column of wastewater of approximately 1m or more. In use, the growth medium 18 is likely to be at least 1m in height. Thus any excess growth of the biofilm will be stripped off the growth medium 18 by the head of wastewater acting thereon. However, as a further precaution against clogging, the upper limit on the surface area per unit volume for the growth medium 18 may be set by the on-set of bridging. This phenomenon occurs when the biofilms on opposing faces of the growth medium 18 become sufficiently thick to meet one another and thereby form an uninterrupted biomass. When this happens the efficiency of the growth medium 18 is substantially reduced by the massive reduction in surface area occurring as a result of this blockage. The growth medium 18 may be formed from any suitable material, in particular plastic, preferably with a specific surface area of about 200 m²/m³.

The growth medium 18 is also preferably elevated slightly off the base of the respective reservoir 12, 14, in order to allow suspended solids, or indeed any biomass which has become separated from the growth medium 18, to settle to the base of the respective reservoir 12, 14, which may then be removed from the reservoir 12, 14 by any suitable means, in conventional fashion. As the growth medium 18 is elevated, any matter collecting at the base of the respective reservoir 12, 14 will not cause a blockage of the growth medium 18.

The apparatus 10 therefore provides an arrangement for alternatively exposing the biofilms within the reservoirs 12, 14 to air and wastewater by the movement of wastewater between the reservoirs 12, 14, making it possible to achieve sequential aerobic, anoxic and anaerobic conditions in the biofilms on the growth medium 18. The use of pressure differences between the reservoirs 12, 14, created by the vacuum pumps 20, 22 and the vents 28, to effect the transfer of wastewater between the reservoirs also provides a number of advantages over the use of liquid pumps. The atmosphere within each reservoir 12,14 can be accurately adjusted in order to suit the biological processes to be performed, either by allowing the introduction of air/oxygen, or by evacuating the reservoirs 12,14. In addition, as each reservoir must be airtight to enable fluid transfer by pressure difference, the gases produced by the biological processing of the wastewater, for example carbon dioxide, may be captured for downstream use/processing/storage. This can thus reduce the carbon footprint of the apparatus 10. This also has the benefit of reducing or eliminating unpleasant odours from the apparatus 10 during use.

## Claims

1. An apparatus for biologically processing fluid comprising a first reservoir containing growth medium for supporting a biofilm thereon; a second reservoir adapted to receive fluid from the first reservoir in order to maintain the fluid, in use, out of contact with the biofilm, thereby exposing the biofilm in order to promote aerobic growth; and means for creating a pressure difference between the interior of the first and second reservoirs in order to effect a transfer of fluid therebetween.

2. An apparatus according to claim 1 in which the pressure means is adapted to alter the pressure in a headspace of the first and/or second reservoir in order to effect the transfer of fluid therebetween.

3. An apparatus according to claim 1 or 2 in which the pressure means is operable to create at least a partial vacuum or a positive pressure above atmospheric in the headspace of one and/or the other of the first and second reservoirs.

4. An apparatus according to any preceding claim in which the first and/or second reservoirs comprise a selectively openable air intake.

5. An apparatus according to any preceding claim in which the first and/or second reservoirs may be rendered airtight during the operation of the apparatus.

6. An apparatus according to any preceding claim comprising a conduit connecting the first and second reservoirs, the conduit being selectively openable to permit the transfer of fluid between the reservoirs.

7. An apparatus according to any preceding claim in which the second reservoir contains growth medium for supporting a biofilm thereon.

8. An apparatus according to any preceding claim in which the apparatus comprises a timer for operating the pressure means at set intervals.

9. An apparatus according to any preceding claim comprising one or more sensors in operative association with the pressure means, the one or more sensors being arranged to actuate the pressure means when the water in the first and/or the second reservoir reaches a pre-determined level.

10. A method for biologically processing fluid, the method comprising introducing the fluid into a first reservoir containing growth medium supporting a biofilm thereon; creating a pressure difference between the first reservoir and a second reservoir in order to effect the transfer of at least a portion of the fluid into the second reservoir; and returning at least a portion of the fluid from the second reservoir to the first reservoir.

11. A method according to claim 10 in which the step of creating a pressure difference between the reservoirs comprises creating at least a partial vacuum in the headspace of one of the reservoirs.

12. A method according to claim 11 in which the step of creating a pressure difference further comprises simultaneously exposing the headspace of the other reservoir to atmospheric pressure or higher while creating the at least partial vacuum.

13. A method comprises the step of providing, in the second reservoir, growth medium supporting a biofilm thereon.

14. A method according to any of claims 10 to 14 comprising automatically transferring the fluid between the reservoirs after a pre-determined interval.
